# EUROPÄISCHE PATENTANMELDUNG

(11) **EP 4 640 027 A1**
(43) Veröffentlichungstag der Anmeldung: **29.10.2025**
(21) Anmeldenummer: 25169521.9
(22) Anmeldetag: 09.04.2025
(51) Int. Cl.: A01B 33/02, A01B 33/06

(54) **PFLANZMULDENFRÄSE ZUM VORBEREITEN VON WALDBÖDEN ZUR BAUMBEPFLANZUNG**

(30) Priorität: 22.04.2024 DE 102024111187; 01.07.2024 DE 202024103566 U
(71) Anmelder: KEMROC Spezialmaschinen GmbH, 36433 Leimbach (DE)
(72) Erfinder: Ertmer, Klaus, 36433 Leimbach (DE); Grüßung, Tino, 98597 Fambach (DE); Zeyada, Mina, 36433 Bad Salzungen (DE)
(74) Vertreter: Engel, Christoph Klaus

(57) **Zusammenfassung**

Die Erfindung betrifft eine Pflanzmuldenfräse (01) zum Vorbereiten von Waldböden zur Baumbepflanzung. Die Pflanzmuldenfräse umfasst eine Anbaukonsole (02) zur Befestigung an einem beweglichen Auslegerarm (13) eines Baggers (12); einen Motor (03); einen vom Motor (03) rotierend angetriebenen Erdfräskopf(05), dessen Rotationsachse koaxial zur Rotationsachse des Motors verläuft und der an seinem Umfang zahlreiche Fräsmeißel (09) trägt; und eine Erdführungshülse (07), die koaxial außenliegend zum Motor (03) und zum Erdfräskopf (05) angeordnet und axial zu diesen verschiebbar gelagert ist, wobei Führungslager (06) für die Erdführungshülse an nicht rotierenden Bereichen des Motorgehäuses und/oder des Erdfräskopfes angebracht sind. Die Erdführungshülse (07) ist in eine obere Position verschiebbar, in welcher sie den Erdfräskopf in axialer Richtung überwiegend nicht umschließt, sowie in eine untere Position, in welcher sie den Erdfräskopf (05) in axialer Richtung überwiegend umschließt.

Die Erfindung betrifft außerdem eine Bodenbearbeitungsmaschine (11) mit einer solchen Pflanzmuldenfräse (01).

## Beschreibung

Die Erfindung betrifft eine Pflanzmuldenfräse zum Vorbereiten von Waldböden zur Baumbepflanzung. Die Pflanzmuldenfräse umfasst dazu einen Motor und einen Erdfräskopf und kann an einen beweglichen Auslegerarm eines Trägergerätes, insbesondere eines Baggers oder einer ähnlichen Maschine angebaut werden.

Insbesondere nach großflächigen Abholzungen von Waldflächen besteht der Bedarf einer schnellen Wiederaufforstung. Aufgrund von Schädlingsbefall und klimatischen Veränderungen hat sich der Bedarf zur Wiederaufforstung in den letzten Jahren drastisch vergrößert, sodass die Forstbetriebe mit herkömmlichen Methoden diese Aufgabe kaum bewältigen können. Aber auch der Bedarf an punktueller Nachbepflanzung in einem Waldbestand steigt und erfordert maschinelle Unterstützung. Ein wesentlicher Bestandteil bei der Wiederaufforstung ist in der Vorbereitung des Waldbodens zu sehen, um Stecklinge einfach einzubringen und vor allem um diesen gute Wachstumsbedingungen zu ermöglichen, wofür die großvolumige Auflockerung des Waldbodens von besonderer Bedeutung ist. Dazu muss der abgeholzte Waldboden, welcher teils schon mit Büschen und Gräsern neu bewachsen ist, gelockert werden. Idealerweise sollen dabei die tieferen Bodenschichten an die Oberfläche und die bewachsene obere Schicht nach unten befördert werden. Die Seitenwände der zu schaffenden Pflanzmulden sollen nicht verfestigt werden, um das Anwurzeln der Setzlinge nicht zu erschweren. Während in leicht zugänglichen Flächen eine Auflockerung des Bodens mit größeren Maschinen erfolgen kann, ist dies bei schwierigem Gelände, beispielsweise bei großer Steigung und/oder bei verbliebenem Bestand zu erhaltender Pflanzen so nicht möglich. Stattdessen ist in diesen Fällen häufige eine manuelle Bodenbearbeitung erforderlich, um Setzlinge in den vorhandenen Bestand zu integrieren.

Aus der EP 2 324 158 B1 ist eine Baggeranbaufräse bekannt, die sich vor allem zum Aufbrechen harter Flächen aus Gestein, Asphalt oder Beton sowie zum Gesteinsabbau eignet.

Die DE 10 2015 115 543 B4 beschreibt eine Streifenfräse mit wenigstens zwei voneinander beabstandeten Hauptfräsen. Die Hauptfräsen dienen der Erzeugung von Fräskanälen und sind auf einer gemeinsamen Achse angeordnet. Außerdem ist wenigstens eine Feinfräsvorrichtung vor oder hinter der Streifenfräse angeordnet. Die Feinfräsvorrichtung besitzt wenigstens ein Fräswerkzeug mit geringerer Frästiefe als die der beiden Hauptfräsen. Die gesamte Vorrichtung ist vergleichsweise groß und schwer und eignet sich daher nur zum Einsatz auf ebenen, gut zugänglichen Flächen. Eine tiefe Bodenlockerung gelingt mit dieser Vorrichtung nicht.

Die DE 10 2005 023 966 A1 beschreibt eine Vorrichtung zur Bearbeitung der Böden für Reihenkulturen. Die Vorrichtung nutzt zur Lockerung des Bodens ein Fräsrohr. Das Fräsrohr kann maximal bis zu seiner Drehachse in den Boden eindringen, sodass entweder nur geringe Bearbeitungstiefen oder aber sehr große Vorrichtungen resultieren. Für einen leichten Aufbau, der dennoch eine Bodenauflockerung bis zu einer Tiefe von ca. 50 cm ermöglichen soll, eignet sich diese Konstruktion daher nicht.

Die DE 198 11 806 A1 zeigt eine an einem Bagger angebrachte Erdfräse. Die Erdfräse umfasst eine eine Mehrzahl von Messern tragende Welle, welche in einem Gehäuse angeordnet ist. Das Gehäuse ist dabei in Richtung des zu bearbeitenden Bodens geöffnet. Die Erdfräse ist an einem Auslegerarm eines motorisch angetriebenen Fahrzeugs befestigt, wobei die Erdfräse mittels eines Hydraulikmotors antreibbar ist. Das Gehäuse weist zwei dem Boden zugewandte seitliche Führungskufen auf. Im praktischen Einsatz zeigt sich jedoch, dass mit dieser Erdfräse die für gute Anwachsbedingungen nötige Lockerung des Bodens nicht bis in die erforderliche Tiefe erreichbar ist.

Die EP 4 209 636 A1 beschreibt eine Bodenfräse zum Vorbereiten von Waldböden zur Baumbepflanzung, die eine Baggeranbaufräse mit einer Anbaukonsole zur Befestigung an einem beweglichen Auslegerarm eines Baggers umfasst. Diese Fräse besitzt mindestens einen Motor, zwei rotierend angetriebene Querschneidköpfe und eine angetriebene umlaufende Fräskette mit zahlreichen Fräsmeißeln. Die Querschneidköpfe sind beidseitig zu der Längsachse der Anbaukonsole angebracht. Die umlaufende Fräskette hat eine Laufrichtung, die parallel zur Längsachse der Anbaukonsole verläuft, und erstreckt sich zwischen den beiden Querschneidköpfen. An der Fräskette und den Querschneidköpfen sind jeweils zahlreiche Fräsmeißel angebracht. Die Bodenfräse umfasst weiterhin ein Bodenleitgehäuse, welches die Anbaukonsole der Baggeranbaufräse wenigstens teilweise umschließt. Das Bodenleitgehäuse dient der Verhinderung des unkontrollierten Auswurfs des beim Eindringen der Fräse in den Waldboden gelockerten Bodenmaterials. Das Bodenleitgehäuse besitzt Befestigungspunkte zur Anbringung an der Anbaukonsole und/oder am Auslegerarm des Baggers. Aufgrund des vergleichsweise hohen Gewichts der Bodenfräse muss das Trägerfahrzeug für eine größere Traglast ausgelegt sein, sodass beispielsweise Minibagger kaum einsetzbar sind. Die Schaffung von kleinen Pflanzmulden zwischen einem vorhandenen Baumbestand gelingt daher mit der bekannten Bodenfräse nur sehr eingeschränkt.

Die Aufgabe der vorliegenden Erfindung besteht ausgehend vom Stand der Technik darin, eine Pflanzmuldenfräse zum Anbau an einen beweglichen Auslegerarm eines Trägergerätes, insbesondere eines Baggers kleiner Bauart, derart weiterzuentwickeln, dass sie für die punktuelle Vorbereitung von Waldböden zur Baumbepflanzung in unwegsamen Gelände und bei vergleichsweise dichtem Baumbestand einsetzbar ist und dennoch eine Aufbereitung des Waldbodens bis zu einer Tiefe von ca. 40 cm gestattet. Besonders bevorzugt soll es die Pflanzmuldenfräse außerdem gestatten, während der Bearbeitung des Waldbodens die Bodenqualität zu verbessern.

Erfindungsgemäß wird die Aufgabe durch die Merkmale der Pflanzmuldenfräse gemäß dem beigefügten Anspruch 1 sowie durch die Merkmale der Bodenbearbeitungsmaschine gemäß dem beigefügten Anspruch 15 gelöst.

Eine erfindungsgemäße Pflanzmuldenfräse eignet sich vor allem zum punktuellen Vorbereiten von Waldböden zur Baum- oder Gehölzbepflanzung in schwierig zugänglichem Gelände und zwischen vorhanden Pflanzen, die möglichst wenig beeinträchtigt werden sollen. Die Pflanzmuldenfräse umfasst zunächst eine Anbaukonsole zur Befestigung an einem beweglichen Auslegerarm eines Baggers oder eines vergleichbaren Trägergerätes bzw. Fahrzeugs. Da die Pflanzmuldenfräse vergleichsweise geringe Abmessungen und ein geringes Gewicht besitzt, kann auch ein Minibagger als Trägerfahrzeug eingesetzt werden oder aber ein größerer Bagger kann die Pflanzmuldenfräse an einem sehr langen Auslegerarm tragen, um dadurch weiter vom Bagger entfernte Bodenflächen zu erreichen.

Die Pflanzmuldenfräse besitzt einem Motor, der in einem Motorgehäuse angeordnet ist und über dieses an der Anbaukonsole angebracht ist. Die Rotationsachse des Motors verläuft senkrecht zur Haupterstreckungsebene der Anbaukonsole und damit im Wesentlichen axial ausgerichtet oder parallel zu Längsachse des Auslegerarms des Baggers.

Die Pflanzmuldenfräse besitzt weiterhin einen vom Motor rotierend angetriebenen Erdfräskopf, der an dem von der Anbaukonsole abgewandten Ende des Motorgehäuse angeordnet ist. Die Rotationsachse des Erdfräskopfes verläuft koaxial zur Rotationsachse des Motors. Der Erdfräskopf trägt an seinem Umfang zahlreiche Fräsmeißel, die bei der Drehung des Kopfes eine zylindrische Fräsmantelfläche beschreiben. Gemäß einer ersten Ausführungsform sind die Fräsmeißel am Umfang des Fräskopfes derart angeordnet, dass die Fräsmantelfläche eine zylindrische Form beschreibt. Gemäß einer zweiten Ausführungsform sind die Fräsmeißel derart am Umfang des Erdfräskopfes angeordnet, dass die Fräsmantelfläche eine Kegelform oder Kegelstumpfform beschreibt. Vorzugsweise werden die Fräsmeißel dabei an Trägerflächen angebracht, die spitzwinklig zur Rotationsachse des Erdfräskopfes verlaufen. Weitere Abwandlungen bei der Anordnung der Fräsmeißel am Erdfräskopf sind möglich. Der Außendurchmesser der Fräsmantelfläche ist bevorzugt mindestens so groß wie der Außendurchmesser des Motorgehäuses.

Die Pflanzmuldenfräse besitzt außerdem eine vorzugsweise zylindrische Erdführungshülse, die koaxial außenliegend zum Motor und zum Erdfräskopf angeordnet und axial zu diesen verschiebbar gelagert ist. Die Erdführungshülse kann in alternativen Ausführungsformen auch einen vieleckigen Querschnitt aufweisen. Die Führungslager für die Erdführungshülse sind an nicht rotierenden Bereichen des Motorgehäuses und/oder des Erdfräskopfes angebracht, sodass die Erdführungshülse zwar axial verschiebbar aber nicht rotierbar gegenüber dem Motorgehäuse und der Anbaukonsole ist. Mindestens das von der Anbaukonsole abgewandte Ende der Erdführungshülse ist geöffnet, sodass der Erdfräskopf aus dieser Öffnung austreten kann. Die Erdführungshülse ist in eine obere Position verschiebbar, in welcher sie den Erdfräskopf in axialer Richtung überwiegend nicht umschließt, vorzugsweise mehr als 4/5 seiner Länge freigibt. Besonders bevorzugt sind in der oberen Position sämtliche Fräsmeißel nicht von der Erdführungshülse überdeckt. Die Erdführungshülse ist in eine untere Position verschiebbar, in welcher sie den Erdfräskopf in axialer Richtung überwiegend umschließt, vorzugsweise den gesamten Erdfräskopf einschließt.

Mit der erfindungsgemäßen Pflanzmuldenfräse lassen sich Böden für die Bepflanzung vorbereiten. Insbesondere ist dies für die Aufforstung in Waldgebieten geeignet, bei denen noch Baumbestand vorhanden ist und daher nur kleine Geräte nutzbar sind oder in denen schwieriges Gelände vorherrscht. Die Pflanzmuldenfräse kann dazu bevorzugt an einen Hydraulikbagger angebaut werden, der einen weitreichenden Auslegerarm besitzt, um mit der angebrachten Pflanzmuldenfräse möglichst weit auf das zu bepflanzende Gebiet zu reichen, damit die Pflanzfläche nicht oder wenig befahren werden muss. Dies ist erreichbar, da die Pflanzmuldenfräse relativ leicht und kompakt gebaut ist.

Die Pflanzmuldenfräse kann bevorzugt zur Vorbereitung von punktuell verteilten Pflanzungen genutzt werden und ermöglicht dabei das Auflockern des Bodens bis in eine Tiefe von ca. 40 cm und mit einem Durchmesser von ca. 40 cm. Zusätzlich zur Auflockerung wird der Boden von unten nach oben transportiert und die oberen Bodenschichten werden im Pflanzloch nach unten verlagert, sodass oberflächlicher Bewuchs beseitigt wird und für die Humusbildung in tieferen Schichten bereitsteht. Um das Bepflanzen insbesondere mit Setzlingen gut vorzubereiten und den manuellen Arbeitsaufwand zu minimieren, ist es vorteilhaft, dass bei der Benutzung der Pflanzmuldenfräse kein erdfreies Loch im Boden entsteht, sondern ein Erdhügel über einem gut aufgelockerten Bodenbereich, in welchen die Pflanze dann eingesetzt wird. Außerdem vermeidet es die Benutzung der Pflanzmuldenfräse durch die Positionierung der Erdführungshülse, dass das lockere Erdreich zur Seite entweicht. Darüber kommt es durch die Fräsmeißel an der Umfangsseite hinaus muss sichergestellt sein, dass der Rand im Erdloch, d.h. unter dem Erdhügel, aufgelockert und nicht verdichtet wird, um dort das Eindringen der Wurzeln der Pflanze zu erleichtern. Dies gelingt durch die Fräsmeißel, die sich an der Umfangsseite befinden und die somit auch die Seitenwände der Pflanzmulde lockern.

Gemäß einer bevorzugten Ausführungsform besitzt die Pflanzmuldenfräse ein Versorgungsrohr, welches bevorzugt koaxial zur Rotationsachse des Erdfräskopfes verläuft und im Bereich der Fräsmeißel nach außen mündet. Über dieses Versorgungsrohr ist zur Verbesserung des Waldbodens ein Granulat oder eine Flüssigkeit in das Erdreich zuführbar, beispielsweise um Nährstoffe einzubringen oder um die Wasserspeicherfähigkeit zu erhöhen.

Besonders bevorzugt sind die Abtriebswelle des Motors und die Antriebswelle des Erdfräskopfes jeweils als Hohlwellen ausgestaltet sind. Der jeweilige Hohlraum bildet dann das Versorgungsrohr, welches am proximalen Ende des Motors beispielsweise über eine Drehkupplung an einen Versorgungsschlauch anschließbar ist, der seinerseits zu einem Vorratsbehälter geführt ist.

Bei der Benutzung der Pflanzmuldenfräse wird durch Bewegen des Auslegerarms des die Pflanzmuldenfräse tragenden Baggers der Erdfräskopf, inklusive der Erdführungshülse auf den zu lockernden Waldboden aufgesetzt. Durch die Führungslager des Erdfräskopfes kann dieser vom Auslegerarm des Baggers in den Boden gedrückt werden, ohne dass die Erdführungshülse wesentlich im Boden einsinkt. Der Erdfräskopf wird durch den Motor zur Rotation veranlasst und bohrt sich in das Erdreich. Die Erdführungshülse steht dabei fest auf dem Boden. Gemäß einer besonderen Ausführungsform ist an dem vom Motor abgewandten Ende der Erdführungshülse ein zur Rotationsachse senkrecht liegender Aufsetzring angebracht, der ein Einsinken der Erdführungshülse in das Erdreich nochmals erschwert. Der Erdfräskopf dringt in den Boden ein und das gelockerte Erdmaterial wird nach oben gedrückt und füllt die Erdführungshülse auf. Nach Erreichen der gewünschten Bohrtiefe wird die Pflanzmuldenfräse angehoben. Das Erdreich fällt nun aus der Erdführungshülse wieder zurück in das Bohrloch. Während des Bohr- oder Fräsvorgangs wird durch die Erdführungshülse sichergestellt, dass seitlich kein oder nur wenig Erdreich entweichen kann.

Gemäß einer bevorzugten Ausführungsform ist eine Antriebswelle des Erdfräskopfes unmittelbar mit der Abtriebswelle des Motors verbunden. In alternativen Ausführungsformen kann sich zwischen dem Motor und dem Erdfräskopf ein Getriebe und/oder eine Kupplung befinden.

Es ist vorteilhaft, wenn beide Enden der Erdführungshülse im Querschnitt geöffnet sind. Damit ist es möglich, dass während des Fräsvorgangs ein Teil des aufgelockerten Erdreichs aus der oberen, nah an der Anbaukonsole befindlichen Öffnung austritt, was einer Blockade des Fräskopfes entgegenwirkt.

Gemäß einer bevorzugten Ausführungsform sind die Führungslager der Erdführungshülse durch mehrere umfangsseitig verteilt angeordnete Bolzen gebildet, die jeweils in Axialschlitzen in der Erdführungshülse geführt sind. Besonders bevorzugt sind drei Bolzen jeweils um 60° versetzt am Motorgehäuse oder an einem Flansch des Erdfräskopfes angebracht und ragen von dort aus radial nach außen in die Axialschlitze der Erdführungshülse.

In einer einfache Ausführungsform sind die Führungslager mit einem Lagerspiel ausgebildet, welches es gestattet, dass die Erdführungshülse gewichtskraftgetrieben in die vordere bzw. untere Position gleitet, wenn die Pflanzmuldenfräse in einer lotrechten Position ist und der Erdfräskopf nicht im Waldboden steckt. Weitergebildete Ausführungsformen können aktive Führungsmittel, wie beispielsweise Hydraulikzylinder aufweisen, welche die axiale Verlagerung der Erdführungshülse bewirken oder unterstützen. Dies kann vorteilhaft sein, wenn bei lehmigen Böden der freie Rücklauf der Erdführungshülse in die vordere bzw. untere Position nicht sichergestellt ist.

Eine weitergebildete Ausführungsform zeichnet sich dadurch aus, dass der Erdfräskopf an seiner vom Motor abgewandten Stirnseite zusätzlich frontale Fräsmeißel aufweist. Diese frontalen Fräsmeißel berühren den Waldboden zuerst und erleichtern bei Rotation des Erdfräskopfes dessen Eindringen in den Boden. Alternativ dazu kann die Stirnseite ohne Fräsmeißel gebildet sein und stattdessen dornartig mit einer Spitze ausgeführt sein oder mehrere bohrkopfförmige Schneiden tragen. Die letztgenannte Ausführung kann besonders gut kombiniert werden mit der kegelförmigen Anordnung der Fräsmeißel am Erdfräskopf.

Es ist vorteilhaft, wenn der Erdfräskopf mindestens drei Reihen mit jeweils mehreren Fräsmeißeln trägt. Vorzugsweise sind diese Reihen gleichmäßig am Umfang des Erdfräskopfes verteilt. Die Reihen der Fräsmeißel verlaufen parallel zur Rotationsachse oder schraubenlinienförmig am Erdfräskopf oder spitzwinklig geneigt, sodass der Fräskopf eine Kegelform bzw. die Form eines Bohrsenkers aufweist. Jede Reihe kann beispielsweise fünf oder mehr einzelne Fräsmeißel tragen. Besonders zweckmäßig ist es, wenn die Fräsmeißel bei Verschleiß oder Beschädigung einzeln austauschbar sind.

Die Abmessungen der Pflanzmuldenfräse sind an den jeweiligen Einsatzzweck anzupassen. Als zweckmäßig hat es sich erwiesen, wenn der Erdfräskopf eine axiale Länge im Bereich von 30 bis 70 cm und einen Durchmesser der Fräsmantelfläche im Bereich von 20 bis 60 cm aufweist. Besonders bevorzugt beträgt die Länge des Erdfräskopfes 40 cm und die Fräsmantelfläche hat einen Durchmesser von ebenfalls 40 cm.

Bei einer vorteilhaften Ausführungsform beträgt die axiale Länge der Erdführungshülse das 1- bis 1,3-fache der Länge des Erdfräskopfes beträgt. Ebenso ist es vorteilhaft, wenn die axiale Länge der Erdführungshülse das 1,5- bis 3-fache des Innendurchmessers der Erdführungshülse beträgt.

Eine Ausführungsform der Pflanzmuldenfräse besitzt als Motor einen von einem Bagger mit Hydraulikflüssigkeit versorgbaren Hydraulikmotor. Alternativ kann ein Elektromotor als Antrieb der Pflanzmuldenfräse dienen.

Die Erfindung betrifft außerdem eine Bodenbearbeitungsmaschine zum Vorbereiten von Waldböden zur Baumbepflanzung. Diese Maschine umfasst einen Bagger mit einem Auslegerarm sowie eine Pflanzmuldenfräse in einer der zuvor beschriebenen Ausführungsformen, wobei die Pflanzmuldenfräse am freien Ende des Auslegerarms lösbar angebracht ist.

Durch die erfindungsgemäße Bodenfräse wird ein leichtes Anbaugerät für Bagger oder gleichartige Maschinen bereitgestellt, womit ein völlig neues Einsatzgebiet für derartige Anbaufräsen erschlossen wird. Aufgrund des geringen Gewichtes der Pflanzmuldenfräse kann ein kleinerer oder mittlerer Bagger mit einem sogenannten Longfront Ausleger bestückt werden, an welchem die Pflanzmuldenfräse angeflanscht wird. Die Bodenbearbeitung kann damit in bis zu 12 Meter Entfernung vom Bagger erfolgen, sodass der Bagger nicht ständig umgesetzt werden muss und große Flächen in hoher Geschwindigkeit bearbeitet werden können, um sie insbesondere für die Aufforstung vorzubereiten. Die Pflanzmuldenfräse kann alternativ auch an adäquaten Forstmaschinen angebaut werden, wenn mit diesen die zu bearbeitenden Flächen besser erreichbar sind.

Die Fräsmeißel können als Spezialmeißel für Holz oder auch als klassische Rundschaftmeißel für Gestein ausgeführt werden. Aufgrund des geringen Durchmessers des Erdfräskopfes hat diese Pflanzmuldenfräse den Vorteil, dass sie eine sehr hohe Schneidkraft und ein geringes Gewicht aufweist. Besonders vorteilhaft ist es, dass die erreichbare Auflockerungstiefe größer als der Durchmesser des Erdfräskopfes sein kann, da der Fräskopf in Achsrichtung in das Erdreich vordringt.

Die Schneidkraft der Pflanzmuldenfräse lässt sich ausreichend hoch dimensionieren, sodass auch Wurzeln durchfräst werden können.

Weitere Vorteile und Einzelheiten der Erfindung ergeben sich aus der nachfolgenden Beschreibung bevorzugter Ausführungsformen, unter Bezugnahme auf die Zeichnung. Es zeigen:
- Fig. 1: eine perspektivische Ansicht einer ersten Ausführungsform einer Pflanzmuldenfräse mit einer Erdführungshülse in unterer Position;
- Fig. 2: eine perspektivische Ansicht der Pflanzmuldenfräse gemäß Fig. 1 mit der Erdführungshülse in oberer Position;
- Fig. 3: eine perspektivische Ansicht einer zweiten Ausführungsform der Pflanzmuldenfräse mit der Erdführungshülse in einer oberen Position;
- Fig. 4: eine Schnittansicht der Pflanzenmuldenfräse gemäß Fig. 3 mit einem Versorgungsrohr;
- Fig. 5: eine vereinfachte perspektivische Ansicht einer Bodenbearbeitungsmaschine in der Ausführungsform eines Baggers mit der Pflanzmuldenfräse gemäß Fig. 1 und 2.

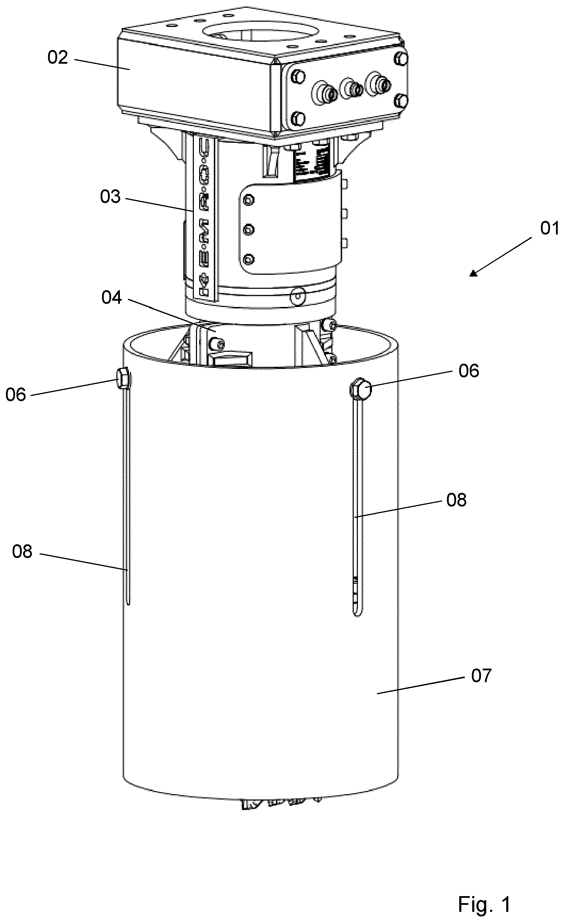

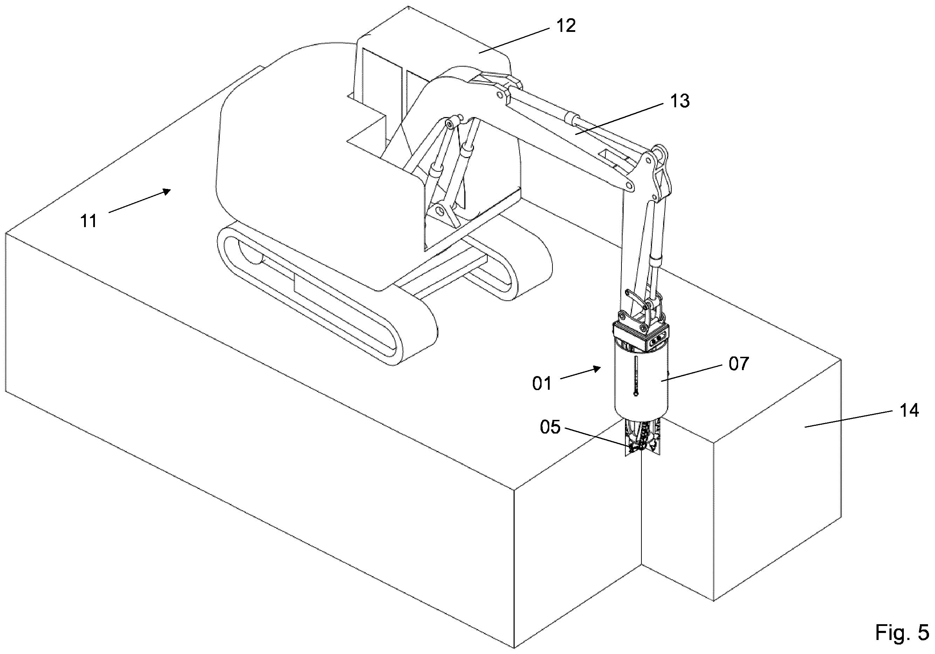

Fig. 1 zeigt eine erste Ausführungsform einer Pflanzmuldenfräse 01. Die Pflanzmuldenfräse ist als ein Baggeranbaugerät ausgebildet und besitzt für die Befestigung an einem Auslegerarm eines Baggers eine Anbaukonsole 02. Die Anbaukonsole 02 wird in bekannter Weise an den Auslegerarm eines Trägergerätes, insbesondere des Baggers (siehe Fig. 5) angeflanscht. Die Pflanzmuldenfräse besitzt einen Hydraulikmotor 03 mit einem Motorgehäuse, über welches er an der Anbaukonsole 02 angebracht ist. Die Rotationsachse des Motors 03 verläuft bei der dargestellten Ausführungsform zentral zur Anbaukonsole 02 und damit koaxial zur Längsachse des letzten Glieds des Auslegerarms, wenn die Pflanzmuldenfräse an diesem montiert ist.

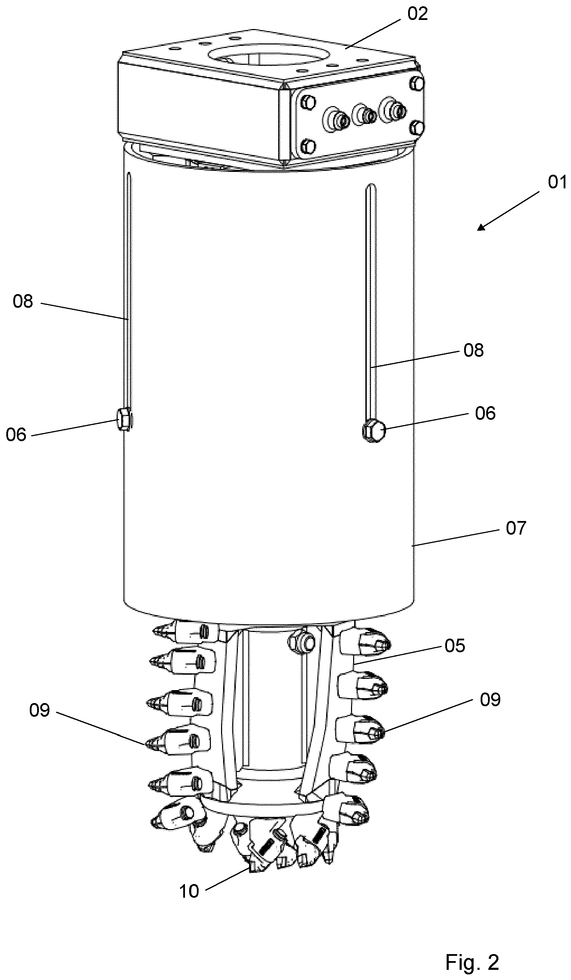

Über einen Verbindungsflansch 04 ist am Motor 03 ein Erdfräskopf 05 (Fig. 2) angebracht. Der Erdfräskopf 05 wird bei aktiviertem Motor durch diesen zur Rotation veranlasst. Die Rotationachse des Motors und die Rotationsachse des Erdfräskopfs sind axial ausgerichtet. Am Verbindungsflansch 04 sind drei Führungsbolzen 06 angebracht, die am Umfang regelmäßig verteilt angeordnet sind. Die Führungsbolzen 06 tragen eine Erdführungshülse 07 und erstrecken sich radial nach außen bis in Axialschlitze 08, die längs in der Erdführungshülse 07 verlaufen. Auf diese Weise ist die Erdführungshülse 07 axial verschiebbar zwischen einer unteren Position, die in Fig. 1 dargestellt ist, und einer oberen Position, die in Fig. 2 gezeigt ist. Befindet sich die Erdführungshülse in der unteren Position, überdeckt sie den Erdfräskopf 05 im Wesentlichen vollständig und lässt den Motor 03 frei. Die Führungsbolzen 06 befinden sich dabei am oberen Ende der Axialschlitze 08.

Fig. 2 zeigt die Pflanzmuldenfräse 01 mit der Erdführungshülse 07 in der oberen Position, sodass der Erdfräskopf 05 im Wesentlichen frei zugänglich ist und der Motor 03 überdeckt ist. Die Führungsbolzen 06 befinden sich dabei am unteren Ende der Axialschlitze 08. In dieser Darstellung ist ersichtlich, dass der Erdfräskopf 05 an seinen Seitenflächen zahlreiche Fräsmeißel 09 trägt, die in axial verlaufenden Reihen zu Gruppen zusammengefasst sind. Bei Rotation des Erdfräskopfes 05 beschreiben die seitlich angebrachten Fräsmeißel 09 eine Fräsmantelfläche, deren Durchmesser kleiner ist als der Innendurchmesser der Erdführungshülse 07. Bevorzugt verbleibt zwischen der Fräsmantelfläche und der Innenseite der Erdführungshülse 07 ein Spalt von 1 bis 5 cm, sodass gelockertes Erdreich dort entlanggeführt werden kann.

An der im Betriebszustand nach unten gerichteten Stirnseite des Erdfräskopfes 05 befinden sich frontale Fräsmeißel 10, die den Vortrieb des Erdfräskopfes 05 in das Erdreich erleichtern.

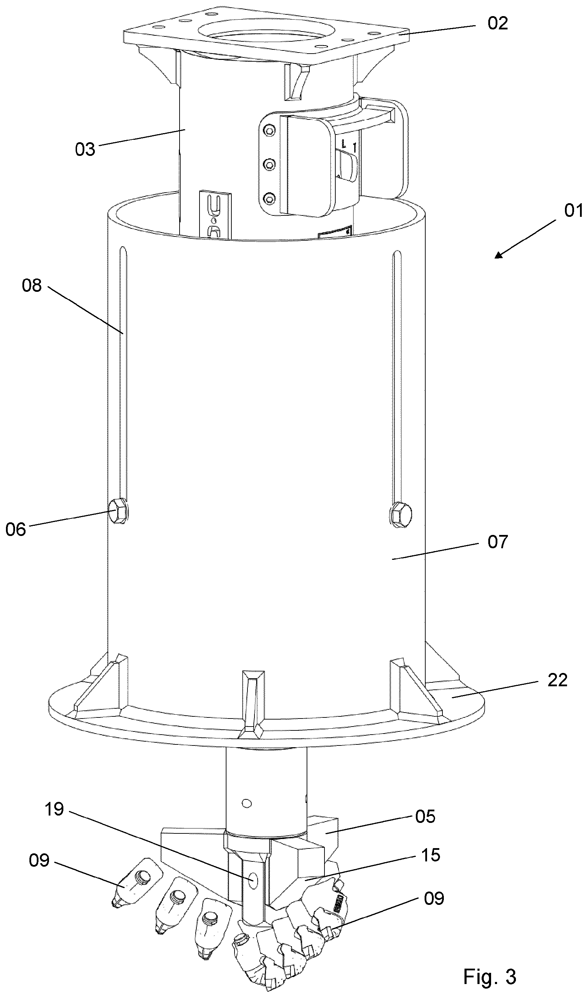

Fig. 3 zeigt eine zweite Ausführungsform der Pflanzenmuldenfräse 01 in perspektivischer Darstellung. Ein wesentlicher Unterschied zu der Ausführungsform gemäß Fig. 1 und 2 besteht in der Formgebung des Erdfräskopfes 05, dessen Fräsmeißel 09 hier an Trägerflächen 15 angeordnet sind, wobei die Trägerflächen spitzwinklig zur Rotationsachse des Erdfräskopfes verlaufen. Die sich bei der Drehung des Erdfräskopfes 05 ausbildende Fräsmantelfläche beschreibt bei dieser Ausführungsform eine Kegelform oder Kegelstumpfform. Dies Ausführungsform hat u.a. den Vorteil, dass auch bei feuchtem oder lehmhaltigem Boden in der Pflanzmulde kein zentrales Loch zurückbleibt, wenn der Erdfräskopf nach der Lockerung des Bodens aus diesem herausgehoben wird. Außerdem besitzt diese Ausführungsform ein gegenüber der zuvor beschriebenen Ausführungsform ein nochmal reduziertes Eigengewicht. Bevorzugt besitzt der Erdfräskopf zwei bis vier Trägerflächen 15, die am Umgang gleichmäßig verteilt angeordnet sind und jeweils Fräsmeißel 09 tragen.

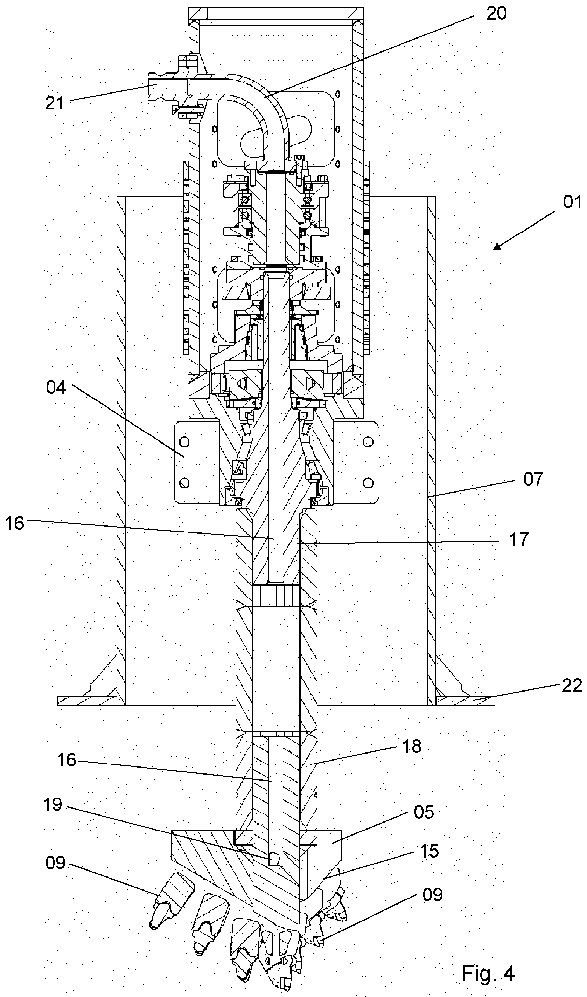

Fig. 4 zeigt die Ausführungsform gemäß Fig. 3 in einer Längsschnittansicht. Als zusätzliche Weiterbildung ist hier ein Versorgungsrohr 16 erkennbar, welches koaxial sowohl in einer Abtriebswelle 17 des Motors 03 als auch in einer Antriebswelle 18 des Erdfräskopfes verläuft. Das Versorgungsrohr 16 mündet im unteren Bereich des Erdfräskopfes an einer Mündung 19 nach außen. Am proximalen Ende der Abtriebswelle 17 über ein Winkelstück 20 an eine Schlauchkupplung 21 angeschlossen. Mithilfe eine Versorgungsschlauchs (nicht gezeigt) kann über die Schlauchkupplung 21 beispielsweise ein Wasser speicherndes Granulat, eine Nährstofflösung oder eine vergleichbare Substanz zugeführt werden, die bei der Erzeugung des Pflanzmulde in das Erdreich gemischt wird, um für die später einzusetzende Pflanze optimierte Bodenbedingungen zu schaffen.

Die in den Figuren 3 und 4 gezeigte Ausführungsform besitzt außerdem am distalen Ende der Erdführungshülse 07 einen Aufsetzring 22, dessen Haupterstreckungsebene senkrecht zur Rotationsachse des Erdfräskopfs 05 liegt. Der Aufsetzring 22 kann mehrere Zentimeter breit sein und erstreckt sich von der Wand der Erdführungshülse 07 nach außen. Der Aufsetzring 22 verhindert ein ungewolltes Einsinken der Erdführungshülse 07 in das Erdreich.

Fig. 5 zeigt in einer perspektivischen Ansicht eine Bodenbearbeitungsmaschine 11 in der Form eines Baggers 12, der einen Auslegerarm 13 umfasst. Am freien Ende des Auslegerarms 13 ist die Pflanzmuldenfräse 01 angebracht. In der dargestellten Bearbeitungssituation ist der Erdfräskopf 05 in Erdreich 14 eingedrungen. Die Erdführungshülse 07 steht mit ihrer nach unten gerichteten Stirnseite (Rand der Hülse) auf dem Erdboden auf und dringt nicht oder nur geringfügig in das Erdreich ein. Das Erdreich wird durch den Erdfräskopf 05 im Bereich der Pflanzmulde gelockert, dabei aber nicht abtransportiert, sondern nur nach oben in die Erdführungshülse hinein befördert. E ist verständlich, dass die Erdführungshülse mit ihrem Innendurchmesser so gewählt ist, dass genügend Volumen zwischen der Innenwand der Erdführungshülse und dem in diese vordringenden Motor verbleibt, um dort gelockertes Erdreich aufzunehmen, ohne dass der Motor dadurch beschädigt wird. Wenn der Auslegerarm 13 im nächsten Schritt vom Bagger 12 angehoben wird, gleitet der Erdfräskopf 05 aus dem Erdreich heraus, gleichzeitig verbleibt die Erdführungshülse 07 zunächst in der auf dem Erdboden aufsitzenden Position, sodass das gelockerte Erdreich in die Pflanzmulde zurückfällt und sich zu einem kleinen Hügel über der Pflanzmulde auftürmt. Wird der Auslegerarm 13 noch weiter angehoben, hebt dann auch die Erdführungshülse 07 vom Erdboden ab und die Pflanzmuldenfräse 01 kann sodann mit dem Auslegerarm zu einer nächsten Position, an welcher eine weitere Pflanzmulde geschaffen werden soll, verschwenkt werden.

### Bezugszeichenliste

- 01: Pflanzmuldenfräse
- 02: Anbaukonsole
- 03: Motor mit Motorgehäuse
- 04: Verbindungsflansch
- 05: Erdfräskopf
- 06: Führungsbolzen
- 07: Erdführungshülse
- 08: Axialschlitze
- 09: seitliche Fräsmeißel
- 10: frontale Fräsmeißel
- 11: Bodenbearbeitungsmaschine
- 12: Bagger
- 13: Auslegerarm
- 14: Erdreich
- 15: Trägerflächen
- 16: Versorgungsrohr
- 17: Abtriebswelle des Motors
- 18: Antriebswelle des Erdfräskopfes
- 19: Mündung des Versorgungsrohrs
- 20: Winkelstück
- 21: Schlauchkupplung
- 22: Aufsetzring

## Patentansprüche

1. Pflanzmuldenfräse (01) zum Vorbereiten von Waldböden zur Baumbepflanzung, umfassend:
• eine Anbaukonsole (02) zur Befestigung der Pflanzmuldenfräse (01) an einem beweglichen Auslegerarm (13) eines Trägergerätes (12);
• einen Motor (03) mit einem Motorgehäuse, der an der Anbaukonsole (02) angebracht ist und dessen Rotationsachse senkrecht zur Haupterstreckungsebene der Anbaukonsole (02) verläuft;
• einen vom Motor (03) rotierend angetriebenen Erdfräskopf(05), der an dem von der Anbaukonsole (02) abgewandten Ende des Motorgehäuses angeordnet ist, dessen Rotationsachse koaxial zur Rotationsachse des Motors verläuft und der an seinem Umfang zahlreiche Fräsmeißel (09) trägt;
• eine Erdführungshülse (07), die koaxial außenliegend zum Motor (03) und zum Erdfräskopf (05) angeordnet und axial zu diesen verschiebbar gelagert ist, wobei mehrere Führungslager (06) für die Erdführungshülse an nicht rotierenden Bereichen des Motorgehäuses und/oder des Erdfräskopfes angebracht sind, wobei mindestens das von der Anbaukonsole (02) abgewandte Ende der Erdführungshülse (07) geöffnet ist, wobei die Erdführungshülse (07) in eine obere Position verschiebbar ist, in welcher sie den Erdfräskopf in axialer Richtung überwiegend nicht umschließt, sowie in eine untere Position verschiebbar ist, in welcher sie den Erdfräskopf (05) in axialer Richtung überwiegend umschließt.

2. Pflanzmuldenfräse (01) nach Anspruch 1, **dadurch gekennzeichnet, dass** eine Antriebswelle (18) des Erdfräskopfes (05) unmittelbar mit der Abtriebswelle (17) des Motors (03) verbunden ist.

3. Pflanzmuldenfräse (01) nach Anspruch 1 oder 2, **dadurch gekennzeichnet, dass** beide Enden der Erdführungshülse (07) im Querschnitt geöffnet sind.

4. Pflanzmuldenfräse (01) nach einem der Ansprüche 1 bis 3, **dadurch gekennzeichnet, dass** die Fräsmeißel (09) derart am Umfang des Erdfräskopfes (05) angeordnet sind, sodass die Fräsmeißel (09) bei der Drehung des Erdfräskopfes eine zylindrische Fräsmantelfläche beschreiben.

5. Pflanzmuldenfräse (01) nach einem der Ansprüche 1 bis 3, **dadurch gekennzeichnet, dass** die Fräsmeißel (09) an Trägerflächen (15) angebracht sind, wobei die Trägerflächen (15) spitzwinklig zur Rotationsachse des Erdfräskopfes (05) angeordnet sind, sodass die Fräsmeißel (09) bei der Drehung des Erdfräskopfes eine kegelförmige oder kegelstumpfförmige Fräsmantelfläche beschreiben.

6. Pflanzmuldenfräse (01) nach Anspruch 4 oder 5, **dadurch gekennzeichnet, dass** der größte Außendurchmesser der Fräsmantelfläche mindestens so groß wie der Außendurchmesser des Motorgehäuses ist.

7. Pflanzmuldenfräse (01) nach einem der Ansprüche 1 bis 6, **dadurch gekennzeichnet, dass** koaxial zur Rotationsachse des Erdfräskopfes (05) ein Versorgungsrohr (16) verläuft, welches im Bereich der Fräsmeißel (09) nach außen mündet und über welches ein Granulat oder eine Flüssigkeit in das Erdreich zuführbar ist.

8. Pflanzmuldenfräse (01) nach Anspruch 7, soweit dieser auf Anspruch 2 rückbezogen ist, **dadurch gekennzeichnet, dass** die Abtriebswelle (17) des Motors und die Antriebswelle (18) des Erdfräskopfes (05) jeweils als Hohlwellen ausgestaltet sind, wobei der jeweilige Hohlraum das Versorgungsrohr (16) bildet.

9. Pflanzmuldenfräse (01) nach einem der Ansprüche 1 bis 8, **dadurch gekennzeichnet, dass** die Führungslager der Erdführungshülse durch mehrere umfangsseitig verteilt angeordnete Bolzen (06) gebildet sind, die jeweils in Axialschlitzen (08) in der Erdführungshülse (07) geführt sind.

10. Pflanzmuldenfräse (01) nach einem der Ansprüche 1 bis 9, **dadurch gekennzeichnet, dass** der Erdfräskopf (05) an seiner vom Motor (03) abgewandten Stirnseite frontale Fräsmeißel (10) aufweist, die zuerst mit dem Waldboden in Kontakt kommen, wenn die Pflanzmuldenfräse in den Waldboden vorgetrieben wird.

11. Pflanzmuldenfräse (01) nach einem der Ansprüche 1 bis 10, **dadurch gekennzeichnet, dass** die axiale Länge der Erdführungshülse (07) das 1- bis 1,3-fache der Länge des Erdfräskopfes (05) beträgt.

12. Pflanzmuldenfräse (01) nach einem der Ansprüche 1 bis 11, **dadurch gekennzeichnet, dass** die axiale Länge der Erdführungshülse (07) das 1,5- bis 3-fache des Innendurchmessers der Erdführungshülse beträgt.

13. Pflanzmuldenfräse (01) nach einem der Ansprüche 1 bis 12, **dadurch gekennzeichnet, dass** der Motor (03) ein von einem Bagger (11) versorgbarer Hydraulikmotor oder ein Elektromotor ist.

14. Pflanzmuldenfräse (01) nach einem der Ansprüche 1 bis 13, **dadurch gekennzeichnet, dass** am vom Motor abgewandten Ende der Erdführungshülse (07) ein zur Rotationsachse senkrecht liegender Aufsetzring (22) angebracht ist, der ein Einsinken der Erdführungshülse (07) in das Erdreich erschwert.

15. Bodenbearbeitungsmaschine (11) zum Vorbereiten von Waldböden zur Baumbepflanzung, umfassend ein Trägerfahrzeug oder einen Bagger (12) mit einem Auslegerarm (13) sowie eine Pflanzmuldenfräse (01) gemäß einem der Ansprüche 1 bis 14, die am distalen Ende des Auslegerarms (13) lösbar angebracht ist.
